# EUROPÄISCHE PATENTSCHRIFT

(11) **EP 1 908 870 B1**
(45) Veröffentlichungstag und Bekanntmachung des Hinweises auf die Patenterteilung: **08.12.2021**
(21) Anmeldenummer: 07090130.1
(22) Anmeldetag: 05.10.2007
(51) Int. Cl.: A01K 61/70, E02B 3/12, D04H 13/00

(54) **Substratgefüllter (Geo-)kunststoffgitterschlauch Verfahren zur Herstellung des substratgfüllten (Geo-)kunststoffgitterschlauches Verfahren zur Schüttbefüllung des (Geo-)kunststoffgitterschlauches Verfahren zur Horizontalbefüllung des (Geo-)kunststoffgitterschlauches**
Substrate-filled (geo) plastic mesh hose, method for manufacturing the substrate-filled (geo) plastic mesh hose, method for horizontal filling of the substrate-filled (geo) plastic mesh hose
Tuyau souple à grille en géo-plastique rempli de substrat Procédé de fabrication du tuyau souple de grille en géo-plastique rempli de substrat Procédé de remplissage du tuyau souple à grille en géo-plastique rempli de substrat par des biens en vrac Procédé de remplissage horizontal du tuyau souple à grille en géo-plastique rempli de substrat

(30) Priorität: 06.10.2006 DE 102006047677; 06.10.2006 DE 202006015419 U
(43) Veröffentlichungstag der Anmeldung: 09.04.2008
(73) Patentinhaber: Wilcke, Claudia Katrin, 19061 Schwerin (DE)
(72) Erfinder: Wilcke, Claudia Katrin, 19061 Schwerin (DE)

(56) Entgegenhaltungen:
- EP-A2- 1 596 008
- US-A- 4 181 450
- US-A- 4 947 791
- US-A- 5 015 123
- US-A1- 2002 131 826
- US-A1- 2003 010 968
- US-A1- 2003 031 511

## Beschreibung

### 1. Themengebiet

Der mit einer Mischung aus geologischem und biologischem Substrat (Kies, Steinchen, Steine, Totholz, Moos, Borke, Zapfen, Tonkügelchen etc.) gefüllte (Geo-) kunststoffgitterschlauch mit dreidimensional gestalteter Struktur wird insbesondere für die ökologische Sanierung von (Fließ-)gewässern, d. h. im Wasserbau, eingesetzt. (u. a. Beschreibung des Hauptanspruchs)

Über die Unterstützung der Evertebraten- bzw. Wasserinsekten- und Jungfischwanderung auf befestigten Sohlen (= Hauptanwendungsgebiet) hinaus kann der substratgefüllte Geogitterschlauch z. B. auch zur Anlage künstlicher Muschelbänke sowie zur Freiborderhöhung genutzt werden.

### 2. Stand der Technik

Zur Unterstützung der Wanderung von Evertebraten / aquatischen Insekten (und Jungfischen) in befestigten Fließgewässerabschnitten (Sohlübergänge, -rampen, Brückendurchlässe, technische Bauweisen von Fischaufstiegsanlagen u. dgl.) sind in der Literatur und im Internet bislang keine speziellen Konstruktionen beschrieben worden.

Lediglich einige dicke ca. 1 m lange Baumabschnitte wurden z. B. am Kraaker Mühlbach (bei Kraak / Rastow, Nähe der A 24) in schnell fließende Gewässerabschnitte (Sohlübergänge) im Rahmen einer ökologischen Sanierung des Gewässers verbracht.

Geotextilschläuche* werden im Erdbau zur Vertikaldränung benutzt. Sie bestehen aus einem hochfesten Filtergewebe und sind für Evertebraten nicht durchlässig. Auch die sog. "Megatubes"**, sandgefüllte Geogewebeschläuche von mehreren Metern Durchmesser, die im Wasserbau zur konstruktiven Ausbildung von überströmbaren Erddämmen (Deiche) eingesetzt werden, sind für Wirbellose nicht passierbar.

Für beide Schlauchvarianten gilt weiterhin, dass ihre glatte Oberfläche bei Überströmung mit Wasser die Haftung aquatischer Insekten nicht unterstützt. Und auch die Füllung, bei der Vertikaldränung Steine, Kies oder Splitt der Körnung 8/16 mm und bei den Megatuben Sand, ist auf Grund der jeweils gleichen Korngrößen für die Wanderung von Evertebraten (Trichopteren etc.) nicht geeignet. Fazit:
Das entscheidende Merkmal, das mögliche Eindringen der Evertebraten in die Schlauchstruktur und anschließend in die Hohlräume des Füllmaterials ist nicht gegeben. Die erwähnten Geogewebeschläuche sind nicht für die Evertebratenwanderung entwickelt und lassen sich auch nicht dafür nutzen.
   * aus: Tiefbau 12/1997 S. 749 (Fachzeitschrift)
   ** aus: bwplus.fzk.de/berichte/Zber/2003/Zberbwt22004.pdf

Relevante Informationen zu solchen Themen sind in folgenden Dokumenten beschrieben:
US 2003/031511 A1 offenbart ein Gitterrohr zum Schutz von Ökosystemen und / oder
Wiederherstellung von Wasserstraßen, die mit einer Vielzahl von Materialien, wie Kompost, Sägespäne, Erde, Kies gefüllt ist. Derartige gefüllte Röhrchen können insitu gefüllt werden, und bestimmte Ausführungsformen umfassen das Stützen eines oder mehrerer Mikroorganismen, Mikroflora, Rhizosphäre, Mykosphären und / oder Ökosysteme, die biologisch und / oder chemisch unerwünschte Verunreinigungen biologisch abbauen, zersetzen, abbauen, binden und / oder filtern können in das Wasser, das durch sie fließt.
US 2003/010968 A1 offenbart ein Flachs-Zaun und eine Herstellungsvorrichtung zur Verringerung der Hangerosion und des Wasserabflusses. Die auf Flachs basierende Zaun- und Herstellungsvorrichtung umfasst ein röhrenförmiges Gehäuse, das mit einer festgelegten Dichte an Flachsfasern und Flachsstängel gefüllt ist, die eine längliche und flexible Struktur bilden.

EP 1 596 008 A2 bezieht sich auf mit Füllmaterialpartikeln befüllbare Hohlkörper in Form von Matten oder Schläuchen aus Textilien als Befestigungsmaterial für durch Hochwasser gefährdete Deiche und Dämme.

US 4 181 450 offenbart eine poröse, verstärkte Erosionsschutzmatte was zur Verhinderung der Bodenerosion nützlich ist.

US 5 015 123 offenbart eine vormontierte Entwässerungseinheit zur Installation im Entwässerungsbereich. Es besteht aus einem perforierten Rohr, das von einem losen Aggregat umgeben ist, das durch eine perforierte Hülse an Ort und Stelle gehalten wird.

US 4 947 791 offenbart ein künstliches Riff, das in einer künstlichen Meeresumgebung für Fische und andere Meereslebewesen verwendet wird, die eine Anzahl von verankerten, schwimmenden ummauerten Behältern umfasst, wobei die Wände aus Kunststoffnetz bestehen und große, ungehinderte Öffnungen aufweisen, durch die Fische hindurchschwimmen können. Die Gehäuse können mit Kunststoffschwellen miteinander verbunden oder unabhängig voneinander und in unterschiedlichen Höhen verankert werden.

US 2002/131826 offenbart einen Faserstamm zur Verwendung als modulare Erosions- und Sedimentkontrollsperre, die aus Faserstämmen aufgebaut ist, die aneinandergefügt sind. Jeder Faserstamm besteht aus einer Menge loser Fasern, die durch einen Stopfen in einem röhrenförmigen Gehäuse festgehalten werden.

### 3. Problem

Befestigte Sohlen, wie sie u. a. bei Sohlübergängen /-rampen in Fließgewässern, in Brückenbereichen und technischen Fischaufstiegsanlagen vorkommen, in Verbindung mit im Vergleich zum normalen Abfluss erhöhten Fließgeschwindigkeiten (z. T. sogar starken Strömungen oder Wirbelbildungen) beeinträchtigen bzw. verhindern die Stromaufwärtswanderung von aquatisch lebenden Evertebraten als auch leistungsschwächeren Jungfischen.

Die Anzahl von Nischen, Hohlräumen für die Fortbewegung der Wirbellosen und das Auffinden von Nahrung, ist deutlich verringert.

Die Evertebraten stellen jedoch die Nahrungsgrundlage für Fische, Rundmäuler sowie am Gewässer lebende Vögel und Kriechtiere dar. Zudem besitzen sie wichtige ökologische Funktionen bei der Ausbildung und Aufrechterhaltung des Fließgewässerkontinuums eines Flusses bzw. Baches.

Oberhalb der veränderten Gewässerabschnitte finden sich oft nur Wirbellosen- bzw. Insektenarten, die entweder flugfähige Entwicklungsstadien ausbilden oder an schnell fließende Gewässer angepasst sind. Die dadurch bedingte Selektion führt ihrerseits wiederum zur Selektion bei den Fischen, die z. T. auf spezielle Wirbellose als Nahrung angewiesen sind.

Die erwähnten Baumstücke bilden in den genannten Gewässerabschnitten keine durchgängigen Leitwerke für die Evertebraten und sind, da nur sporadisch vorhanden, auch kaum für diese aufzufinden. Zudem ist die Oberfläche, nachdem sich die Borke abgelöst hat, glatt und bietet den Tieren wenig Halt. Nischen für die Fortbewegung fehlen gänzlich. Lediglich Jungfische dienen die Stücke als Strömungsschatten.

### 4. Lösung einschließlich erreichter Vorteile

Die Erfindung betrifft einen substratgefüllten (Geo-)kunststoffgitterschlauch gemäß Anspruch 1, Verfahren zur Herstellung eines solchen substratgefüllten (Geo-)kunststoffgitterschlauchs gemäß den Ansprüchen 10 und 11, ein Verfahren zur Schüttbefüllung eines solchen substratgefüllten (Geo-)kunststoffgitterschlauchs gemäß Anspruch 13 sowie ein Verfahren zur Horizontalbefüllung eines solchen substratgefüllten (Geo-)kunststoffgitterschlauchs gemäß Anspruch 14.

Kann im Rahmen einer ökologischen Sanierung der durch eine befestigte Sohle (10) und schnelle Fließgeschwindigkeiten gekennzeichnete Flussabschnitt nicht verändert werden, da z. B. angrenzende Bebauung oder ein bestehen bleibendes Wehr dies unmöglich machen, dient der entwickelte Schlauch der Aufwärtswanderung der Evertebraten.

Die Schläuche nehmen im Unterwasser des betreffenden Gewässerabschnittes ihren Anfang vor und im unmittelbaren Übergangsbereich zwischen Normalabfluss ohne Sohlbefestigung und schnellfließender und / oder befestigter Strecke. Einige Meter oberhalb der betroffenen Fließstrecke enden dann die Schläuche.

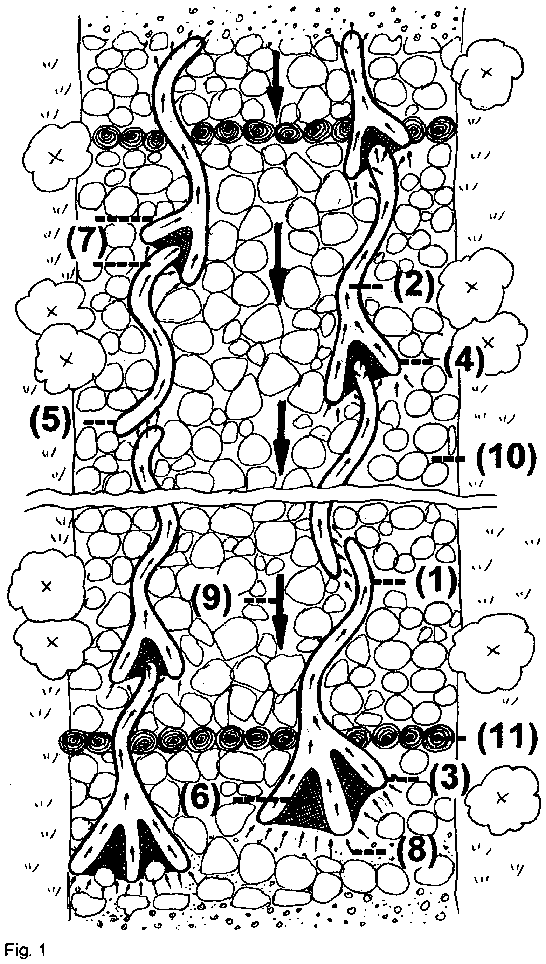

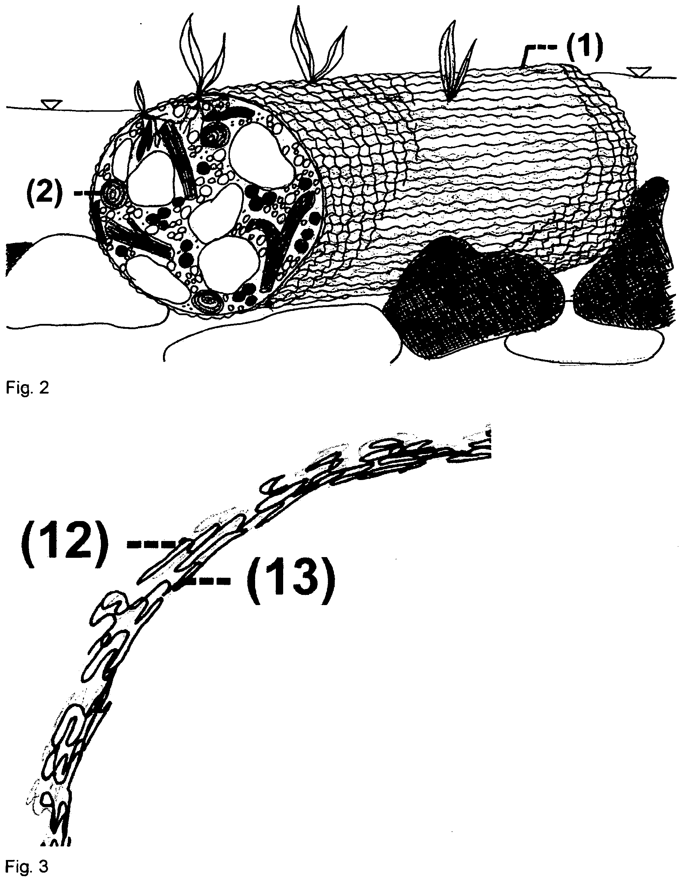

Da die betroffenen Strecken oft 80 m oder mehr lang sein können, werden über diese Distanz mehrere aneinanderfolgende und an den Enden teils überlappende Schläuche (7) ins Gewässer eingesetzt, um ein kontinuierliches Leitwerk zu bilden. Die strukturierte (dreidimensionale) Oberfläche (Fig. 3, 4, 9, 10) des Schlauches bricht zum Einen die glatte Strömung, die ansonsten über die Steine führt, und bewirkt Mikroverwirbellungen, zum Anderen können die Insekten in die Schlauchstruktur einwandern. Auf diese Weise können die Evertebraten sowohl in dieser Schlauchstruktur aufwärts (8) wandern, sie können aber auch weiter ins Schlauchinnere vordringen und ihre Wanderung in den Hohlräumen (Nischen) zwischen Steinchen, Steinen, Kies, Holz, Zapfen, Moosen etc. fortsetzen.

In diesem kompakten Schlauchinhalt finden sie dann zudem auch ihre Nahrung - Phyto- und Zooplankton sowie einwachsende Wurzeln und Pflanzenteile.

Der Schlauch selbst dient dabei nicht nur dem Eindringen und dem Aufenthalt der Wirbellosen, er hält die Steinchen, Holzstücke etc. am Ort, die auf Grund ihrer geringen Schleppspannung oder ihrer Schwimmfähigkeit (Holz) ansonsten von der Strömung mitgerissen werden würden. Er besitzt dementsprechend eine erosionsschützende Funktion.

Für Fische, insbesondere leistungsschwächere Arten oder Jungtiere, stellt der geschwungen verlegte Geogitterschlauch darüber hinaus einen optimalen Strömungsschatten dar.

Und verlegt man die Schläuche innerhalb von technischen Fischaufstiegsanlagen, so z. B. im Schlitzpass, dienen sie nicht nur der Wanderung von Evertebraten und als Strömungsschatten; besser als durch die Anordnung einzelner großer Steine können durch sie Strömungen innerhalb der Anlage beeinflusst und gelenkt werden, so dass der Fischaufstieg optimiert wird. (Derzeit erzielen viele technische Fischaufstiegsanlagen nur unbefriedigende Ergebnisse.)

### Weitere Ausgestaltung der Erfindung

Über die Ausbildung von geteilten bzw. gefächerten unteren Schlauchenden ((3), (4), (6)) finden die aquatischen Insekten einen guten Zugang zum Wanderschlauch - dies sowohl wenn sie sich auf dem Gewässerboden fortbewegen als auch beim Schwimmen im Wasser. Wie ausladend das Schlauchende gestaltet wird, hängt von der Gewässerbreite und der Anzahl der parallelverlaufenden Schläuche ab. Dabei sind die geteilten Schlauchenden zum Unterwasser hin auszurichten.

Der Schlauch besteht aus einem dreidimensional strukturierten (Geo-)kunststoffgitter (Fig. 3, 4, 9, 10). Je nach Durchmesser muss dieses Gitter unterschiedlichen Kräften, durch die Füllung und Strömung bedingt, standhalten. Dementsprechend kommen auch unterschiedliche (Geo-)kunststoffgitter zum Einsatz.

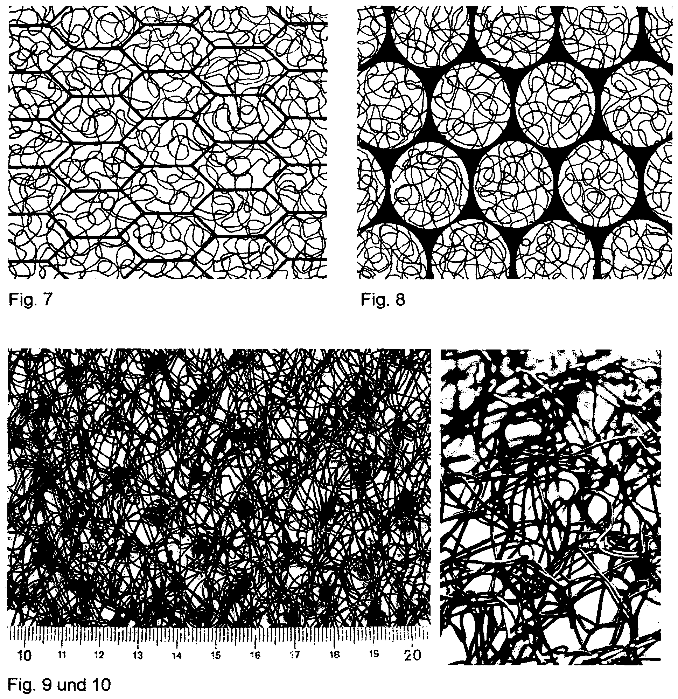

Für Schläuche kleineren Durchmessers ist ein dreidimensional stukturiertes Gitter (14) aus Endlosfilamenten, die zur Außenseite eine Waben- oder Höckerstruktur (12) aufweisen, ausreichend. Die zum Schlauchinneren zeigende Unterseite bildet eine ebene Fläche (13) - eine sog. Sohle. Die Festigkeit dieser Struktur wird durch regelmäßig angeordnete Punkte, an denen die Filamente miteinander verschweißt sind, erreicht. (Fig. 9, 10)

Die Filamente ahmen in diesem Sinne Wurzelstrukturen nach.

Bei Schläuchen mit größerem Durchmesser wird die beschriebene dreidimensionale Wirrlage aus Endlosfilamenten (15) durch ein grobes ebenes (Geo-)kunststoffgitter (16) gestützt. Dieses kann z. B. eine Rechteck- (Fig. 6) oder Sechseckstruktur (Fig. 7) aufweisen oder auch aus einem großgelochten Schlauch (Fig. 8) bestehen. Die Filamentenwirrlage wird mit dieser (Geo-)gitterlage durch Schweißen, Kleben oder Nähen verbunden.

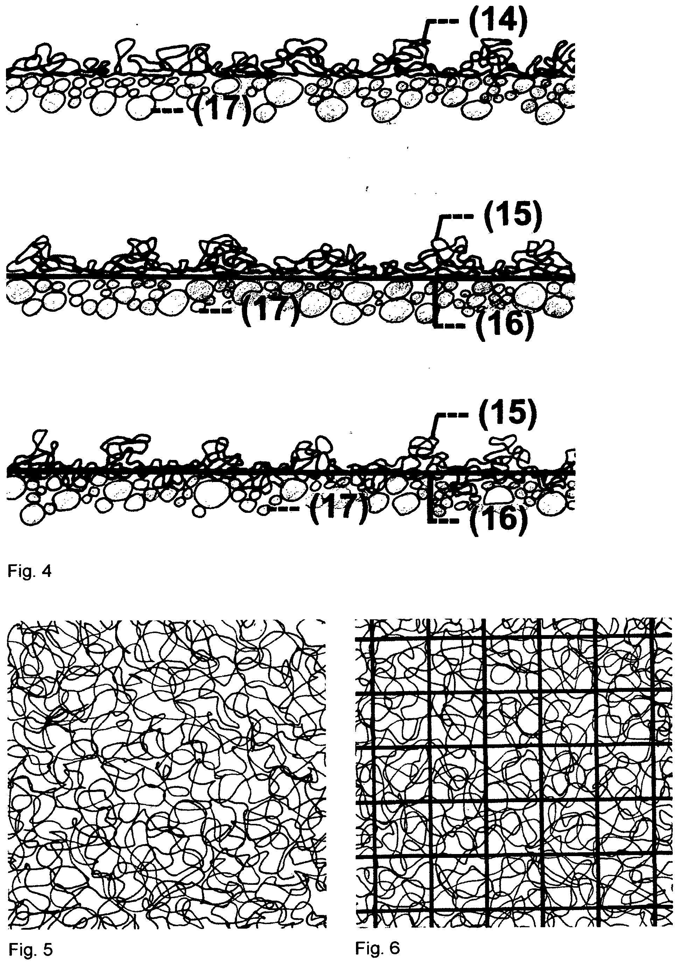

Eine mögliche weitere Ausführungsvariante ergibt sich, wenn die Filamente durch die obenauf liegende grobe (Geo-)gitterstruktur durchdrücken und dadurch beide Schichten untrennbar miteinander verbinden. (Fig. 4 - unten) Eine weitere Maßnahme, die Stabilität eines größeren Schlauches zu erhöhen, besteht in der Integrierung eines (Geo-)kunststoffgitters im Innenraum, welches diesen in zwei oder mehrere Längskompartimente aufteilt. Dieses Gitter wird am Schlauch durch Kleben, Schweißen oder Nähen befestigt.

Das Material des (ebenen) (Geo-)gitters sowie der Filamente ist ein (Geo-)kunststoff oder eine Kombination von (Geo-)kunststoffen, die sich insbesondere durch eine hohe Lichtbeständigkeit und Zugfestigkeit auszeichnen. Es werden Polymere eingesetzt, die gegenüber Wasser (in üblichen Gewässertemperaturen), Witterung und Chemikalien, wie sie üblicherweise im Boden, Oberflächen- oder Grundwasser vorkommen, beständig sind. Das Material selbst darf nicht toxisch sein.

Für die (Geo-)gitter kommen sowohl Extrusionsprodukte wie gewebte ummantelte bzw. beschichtete grobe textile Flächengebilde zum Einsatz.

Folgende Polymere sind u. a. anwendbar: Polyamid (PA), Aramid (aromatische PA), Polyethylen (PE), Polyester / Polyethylenglykolterephthalat (PES / PET), Polypropylen (PP), Polyvinylalkohol (PVA) sowie Carbonfasern. Die spezifischen Eigenschaften der Polymere können dabei durch den Einsatz von Stabilisatoren, Farbpigmenten etc. verbessert sein.

Es handelt sich hierbei um Kunststoffe, die nicht ausschließlich für den Geo- bzw. Erd- oder Wasserbau bestimmt sein müssen, von daher ist die hier verwendete Bezeichnung Geogitter für Kunststoffgitter der genannten Polymere zu verstehen. Die Endlosfilamente, die u. a. auch als Drähte bezeichnet werden, können Durchmesser aufweisen, die die in der Literatur für Drähte von Drahtwirrlagen beschriebenen Stärken übertreffen. Die Endlosfilamente müssen innerhalb der Schlauchwirrlage auch nicht alle den gleichen Durchmesser besitzen. So kann es in einer Wirrlage Filamente von z. B. 0,5 mm und 1,2 mm Stärke geben.

Optimale Farbe für den Kunststoff ist hellgrau, steingrau, blaugrau, grüngrau oder beige. So fällt er im Gewässer nicht auf, und es wird eine Aufhitzung des Materials durch Sonneneinstrahlung für die die Gewässeroberfläche durchragenden Schlauchanteile (einschließlich einer möglichen Beeinträchtigung des Aufwuchses in diesen Anteilen) vermieden.

Die Zusammensetzung des Substrates (Füllmaterial) wird durch die Platzierung des Schlauches innerhalb des Gewässers bestimmt.

Dieses ist abhängig vom jeweiligen Fließgewässerabschnitt entsprechend des Fließgewässerkontinuums. Allgemein bzw. in der Praxis kann man sich an den naturgegebenen Substraten der vorhergehenden und folgenden Gewässerabschnitte orientieren.

Die Füllung (2) setzt sich aus einer Mischung von geologischem und biogenem Substrat zusammen. Dazu zählen Kies, Steinchen und Steine, Totholz, Borke, Zapfen, Moos etc. Diesen Materialien können auch Tonkügelchen (Geoton) zugefügt werden.

Für kleinere Projekte bzw. die private Nutzung erweist es sich als vorteilhaft, die Schläuche auch ungefüllt und die Substratfüllung separat im Handel (Baumarkt) anzubieten. Die Befüllung kleinerer Schläuche kann auch vor Ort durch Schüttung mittels z. B. einem Kanalrohr vorgenommen werden. Der Verschluss erfolgt dann durch Kabelbinder, Klammern o. ä.

Eine Einsatzmöglichkeit im privaten Bereich ergibt sich z. B. in der Freiborderhöhung wasserseitiger Böschungen.

Der substratgefüllte Schlauch selbst bedarf keiner speziellen Befestigung im Gewässer, er hält sich durch die Füllung selbst.

Verfahren zur Herstellung des (substrataefüllten) (Geo-)kunststoffgitterschlauches

Prinzipiell unterscheidet man zwei Möglichkeiten, einen derartigen (Geo-)gitterschlauch herzustellen.

Die naheliegende Möglichkeit besteht darin, aus einer dreidimensional strukturierten (Draht-)wirrlage, wie es sie als Erosionsschutzmatten gibt, einen Schlauch zu nähen bzw. die Seiten des Flächengebildes / der Matte durch Kleben oder Schweißen zu verbinden. Nachteil dieser Herstellung ist die Tatsache, dass das Versagen einer Naht (auch Schweißnaht oder Klebfläche) zum Öffnen des Schlauches, dem Austreten des Substrates und damit letztlich zur Funktionslosigkeit führt.

Deshalb wurden Varianten entwickelt, bei denen spezielle Extruderanlagen Endlosschläuche als dreidimensional strukturierte Wirrgebilde herstellen. Bei der Schlauchherstellung sind zwei Extruderanlagen zu unterscheiden, denn es werden Kunststoffe mit größerer und kleinerer Dichte als Wasser verarbeitet.

Der gesamte Herstellungsprozess für einen substratgefüllten (Geo-)gitterschlauch umfasst die Produktion des Endlosschlauches in einer Extruderanlage, u. U. die Verstärkung des strukturierten (Geo-)kunststoffgitterschlauches durch ein ebenes (Geo-)kunststoffgitter, die Endengestaltung und die Befüllung, die mit dem Verschließen des Schlauches abschließt.

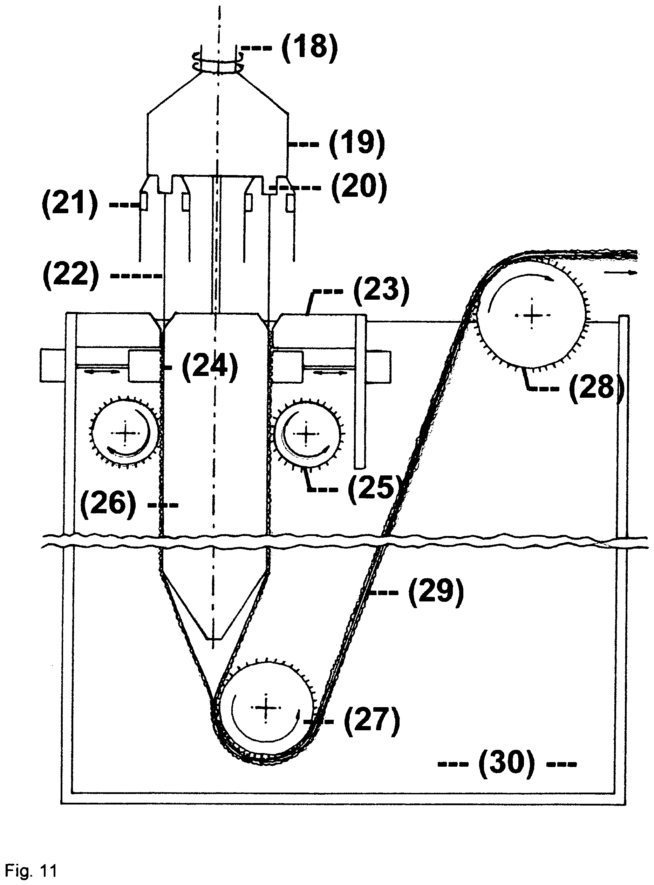

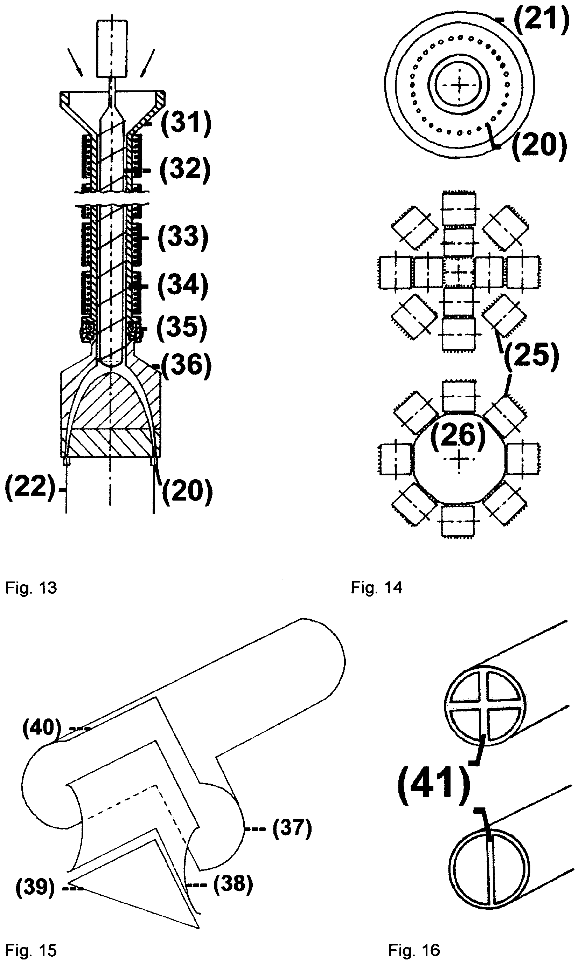

Verfahren zur Herstellung eines dreidimensional strukturierten (Geo-)kunststoffgitterschlauches mit strukturierter Außenfläche aus Polymeren, deren Dichte größer als Wasser ist (Fig. 11 und 13)

Es werden Kunststoffe, wie z. B. PA und PET, als Granulat oder in pulverisierter Form über einen Trichter (31), der sich über der vorzugsweise vertikal angeordneten Extruderanlage (Fig. 13) befindet, zugeführt. Im Extruder wird das Material über eine Extruderschnecke (32) gefördert. Heizspiralen (33) erwärmen den Kunststoff, er schmilzt, verdichtet sich, wird entgast, plastifiziert und homogenisiert. Dabei werden je nach Kunststoff Temperaturen zwischen 200°C (am Beginn) und bis zu 300°C im Extruderkopf bzw. an den Düsen (20) bei einem Druckaufbau von 250 - 400 bar erreicht. Das Extrudat gelangt dann in das sog. Werkzeug. In diesem Fall stellt es eine Art Glocke ((19) bzw. Fig. 13) oder Kegelhülle dar, aus der schließlich am unteren Rand über kreisförmig angeordnete Düsen (20) die Endlosmonofile (22) austreten.

Von Vorteil hierbei ist es, wenn diese Filamente nicht stets auf die gleiche Stelle der Schlauchformkegels treffen. Umkreisen die Endlosfilamente in Wirrlage den Schlauchformzylinder (26), entsteht ein Schlauch mit noch höherer Zugfestigkeit, als eine normale Wirrlage bietet. Dies wird erreicht, wenn Extruder (Fig. 13) einschließlich dem daran befindlichen Werkzeug eine langsame Rotation vollführen. Eine andere Möglichkeit ist die langsame Rotation des Düsenmundstückes des Werkzeuges. In Abhängigkeit vom anliegenden Druck innerhalb des Extruders und der Viskosität des entsprechenden Extrudates kann auch das Werkzeug selbst (gegenüber dem stationären Extruder) in eine langsame Rotation versetzt werden. Die aus den Düsen austretenden Filamente fallen in ein Wasserbad von ca. 10 bis 20 cm Höhe, welches sich in einer Art Kegel befindet. Dieser wird aus aus einem äußeren Formring (23), der zum Schlauchformzylinder hin abgerundet ist, und dem Schlauchformzylinder (26), welcher nach außen hin ebenfalls abgerundet ist, gebildet. Auf Grund der Dichte des Extrudates, welche höher als Wasser ist, gleiten die sog. Drähte in die Tiefe. Unmittelbar vor der Strukturrolle kommt es zu einem Stau - die Wirrlage entsteht. Die radial um den Zylinder angebrachten Strukturformpressen (24) oder auch -walzen geben der Schlauchoberfläche ihre Hoch-Tief-Stuktur und verschweißen Filamente punktartig miteinander. Die Geschwindigkeit der austretenden Drähte in Kombination mit der Transportgeschwindigkeit der Formwalzen (-teile) und der Länge deren Prägestempel (= Abstand zwischen Schlauchformzylinder und Formwalzen bzw. -präger) bestimmen die Dicke der Wirrlage und ihre Oberflächenstruktur. Unterhalb dieses Formgebungsprozesses angeordnete Rollen transportieren den entstehenden Schlauch, der sich gleichzeitig im Wasserbad (30) abkühlt, bis er schließlich das untere Ende des Schlauchformzylinders erreicht und dann über zwei Umlenkrollen (27, 28) die Extruderanlage verlässt, um als Endlosschlauch aufgerollt, der weiteren Verarbeitung zugeführt zu werden.

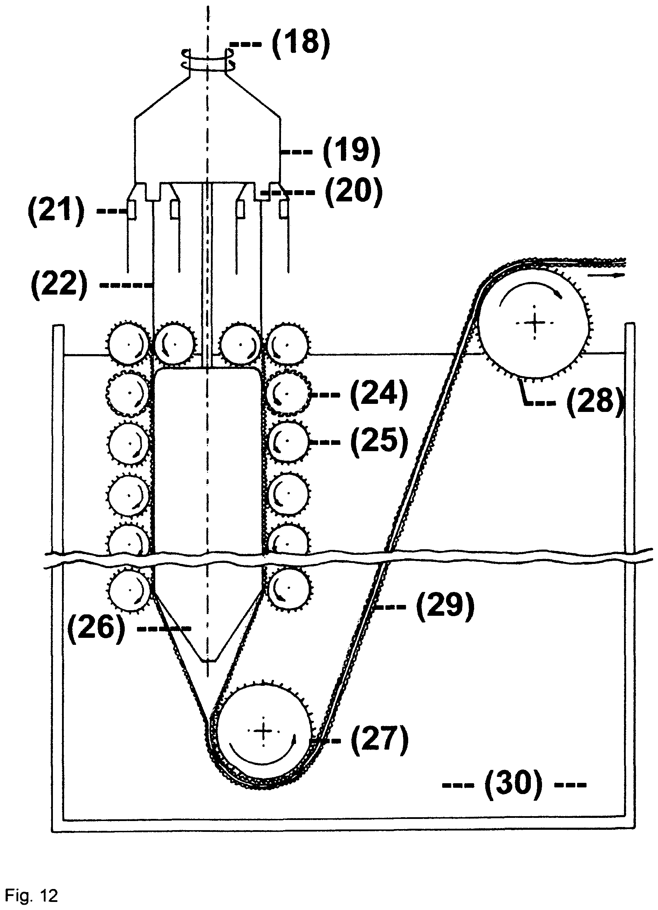

Verfahren zur Herstellung eines dreidimensional strukturierten (Geo-)kunststoffgitterschlauches mit strukturierter Außenfläche aus Polymeren, deren Dichte kleiner als Wasser ist (Fig. 12, 13 und 14)

Typisch verarbeitetes Polymer mit geringerer Dichte als Wasser ist PP. Innerhalb des Extruders und des Werkzeuges laufen hier die gleichen Prozesse ab, wie sie bereits im vorhergehenden Verfahren beschrieben wurden.

Die austretenden Drähte fallen auf das Wasser, schwimmen auf und bilden unmittelbar ein Gewirr. Dieses wird über Transportrollen mit Spikes (25), die sich etwa 10 bis 30 mm voneinander entfernt gegenüber "stehen" (Fig. 14 mittig), in die Tiefe und damit über den Schlauchformzylinder gezogen. Um den Zylinder sind wiederum Formwalzen (24) angebracht, die die Außenstruktur des Schlauches prägen und in Abständen Filamente zu Punkten zuzammenschweißen. Der Schlauch wird anschließend über Transportrollen (mit Spikes) in die Tiefe des Wasserbades (30) gezogen bis das untere Ende des Schlauchformzylinders erreicht ist und über zwei Umlenkrollen (27, 28) der Aufwicklung zugeführt.

### Verstärkung durch ebene (Geo-)kunststoffgitter

Die Endlosschläuche werden auf die spätere Länge zugeschnitten. Anschließend werden sie über einen langen Zylinder gezogen, auf dem bereits ein ebener (Geo-) gitterschlauch aufgezogen wurde.

Eine weitere Variante ergibt sich, wenn man zuerst den dreidimensionalen Schlauch und anschließend den ebenen (Geo-)gitterschlauch aufzieht.

Diese ebenen (Geo-)gitterschläuche entstehen entweder als Folienendlosschlauch, der gelocht und verstreckt wird, oder als gewebter Textilschlauch, dessen Gewebe kunststoffummantelt wird. Entsprechende Herstellungsverfahren sind Stand der Technik und werden deshalb hier nicht weiter ausgeführt.

Auf diesem Zylinder werden die beiden Schläuche miteinander verbunden (Nähen, Schweißen oder Kleben). Dabei kann der Zylinder so angelegt sein, dass er aus mehreren Längsteilen, die wie Tortenstücke zusammengefügt sind, besteht.

Werden diese durch eine interne Schnecke auseinander"gefahren", verstrecken sich zudem die Schläuche in Querrichtung. Dieser Prozess läuft vor dem Verbinden ab.

Bei der Variante, bei der der ebene (Geo-)kunststoffgitterschlauch über den dreidimensionalen gezogen wird, drücken die Filamente durch das Gitter hindurch, wenn der Zylinder auseinanderdriftet.

Wird zur Stabilisierung ein Innen(geo-)gitter (41) benötigt, mit dem der Schlauchinnenraum in Kompartimente unterteilt wird, "entsteht" dieses, indem mehrere (Geo-)gitterschläuche (eben oder strukturiert) mit kleinerem Durchmesser auf die Längsteile des Zylinders gezogen und dann mit dem darüber gezogenen (Geo-) gitterschlauch verbunden werden. (Fig. 16)

Der Schlauch ist nun in Rohform fertig.

### Endengestaltung

Mehrteilige Enden (z. B. die Zweierendung) (Fig. 15) entstehen, indem der Schlauch am Ende aufgeschnitten wird. Die Schnitte (40) reichen längs in das Gebilde und "stehen" sich gegenüber. Anschließend wird eine zuvor zugeschnittene Flächenwirrlage (38), deren Maße sich aus halber Schlauchbreite und doppelte Schnitttiefe ergeben, eingesetzt und mit den Schnittflächen am Schlauch durch Nähen (Kleben, Schweißen) verbunden. In gleicher Art und Weise kann auch im selben Arbeitsgang noch ein Keil (39) (Drahtwirrlage) zwischen den Enden eingefügt werden.

Eine weitere Möglichkeit besteht darin, Enden thermisch zu dehnen und damit eine Aufweitung herzustellen. Dafür wird das Schlauchende erwärmt und über ein Formteil gezogen oder aber ohne vorherige Erwärmung über ein warmes / heißes Formteil gestülpt. So ein Formteil kann auch, nachdem es in den Schlauch gezogen wurde, "aufgehen" - d. h. seinen Durchmesser vergrößern.

Die aufgeteilten oder erweiterten Schlauchenden werden anschließend verschlossen. (Nähen, Schweißen, Kleben)

Der einseitig geschlossene (Geo-)kunststoffgitterschlauch wird nun mit Substrat befüllt.

### Verfahren zur Schüttbefülluna des (Geo-)kunststoffgitterschlauches

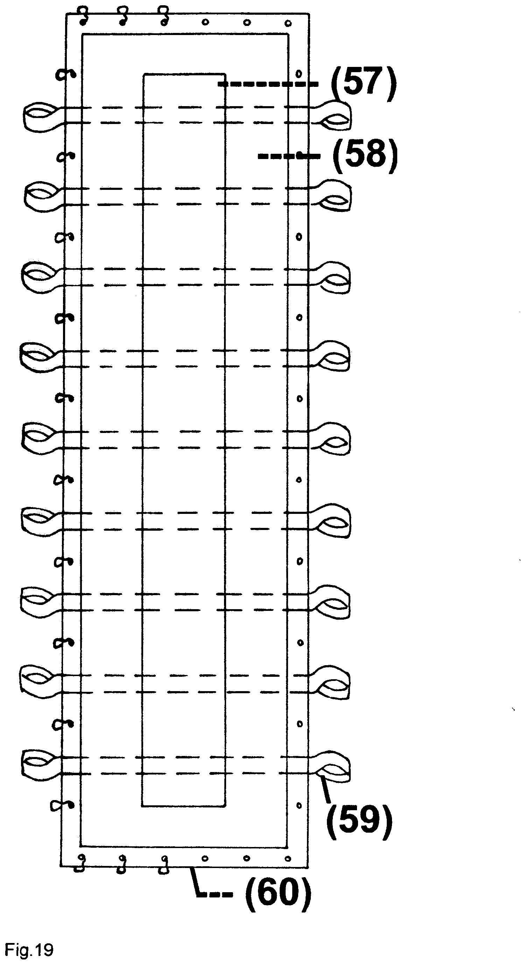

Der (Geo-)gitterschlauch wird auf eine mit Rollen ausgestattete Lagerfläche (52), auf welcher zuvor ein Schlauchtransportschutz (51) ausgebreitet wurde, gelegt. Die Transportschutzhülle ((51) bzw. Fig. 19) besteht aus einem hochreißfestem Gewebe. Ihr vorderes Ende wird z. B. über Klemmen o. ä. mit dem Schlauch verbunden. Dadurch wird gesichert, dass sich die Transportschutzhülle nicht unter dem zu füllenden Schlauch bei dessen Bewegung auf der Lagerfläche einrollt.

In das offene Schlauchende werden nun Krallen (48) eingehängt. Diese ziehen den Schlauch über das Füllrohr (49) bzw. die Füllrohre, sofern der Schlauch durch Innen(geo-)gitter in Längskompartimente unterteilt ist.

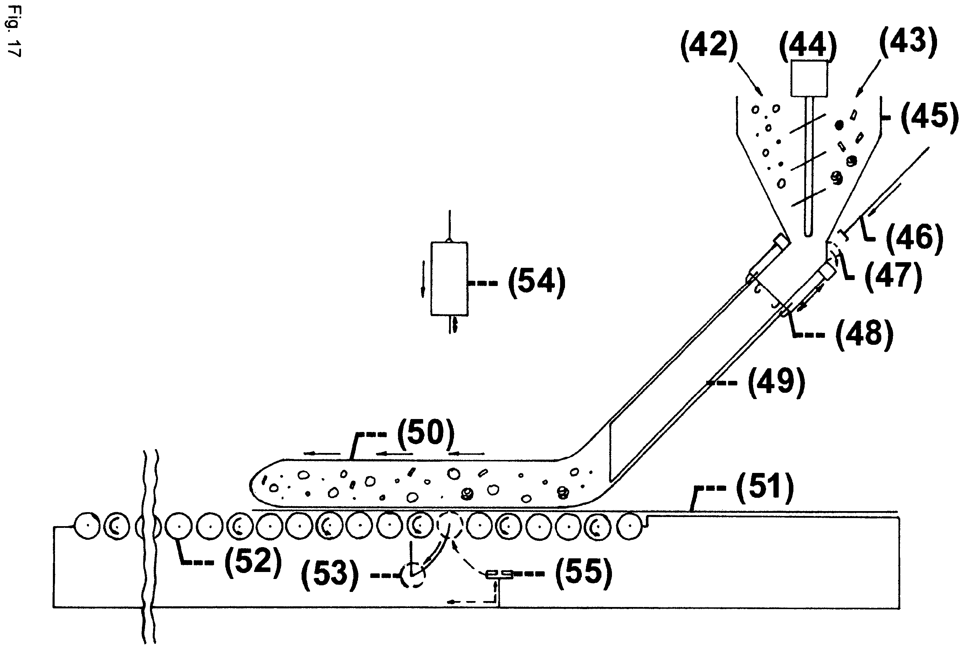

Bei der Schüttbefüllung (Fig. 17) wird das geologische Substrat (42) mit dem biogenen Material (43) über einen Trichter (45), der mit einer Schnecke (44) ausgestattet ist, in das schräg abwärts gerichtete Rohr befördert. Das dadurch in den Schlauch rutschende Substrat bewirkt ebenfalls das Vorrollen des Schlauches auf der Lagerfläche. Dabei wird durch die Krallen, die über Züge / Zugbänder verankert sind, ein zu schneller Vorschub verhindert. Der gefüllte Schlauch liegt schließlich vollständig auf der Lagerfläche. Die Krallen werden ausgehängt.

Der Schlauch bekommt entweder über angetriebene Rollen einen Vorschub oder wird über Krallen gezogen, bis er die Position erreicht, wo eine Nähmaschine (54) (oder Schweißen bzw. Kleben) das Füllende verschließt.

Die Transportschutzhülle, die auf der Unterseite mit Quergurten (59) ausgestattet ist, wird mittels Karabiner (60) (auch ein Reißverschluss wäre möglich) über dem Schlauch geschlossen. Anschließend wird über Gurtschlaufen der Transportschutz einschließlich des gefüllten (Geo-)gitterschlauches an einem Schwenkkran befestigt und transportiert. So kommt der versandtfertige (Geo-)gitterschlauch einschließlich Transporthülle auf eine Palette. Die Transporthülle verhindert hier das Ineinanderkrallen benachbarter Schläuche. Der Transportschutz wird erst im Zuge der Verlegung wieder vom Schlauch getrennt.

Verfahren zur Horizontalbefüllung des (Geo-)kunststoffgitterschlauches

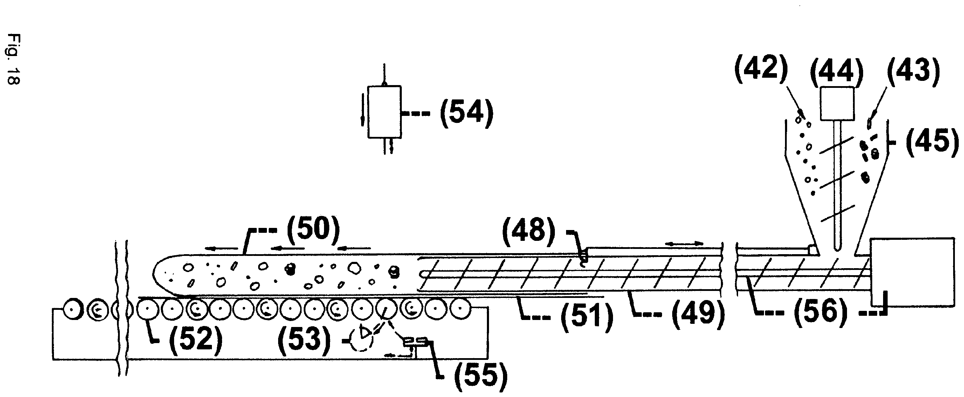

Eine weitere Fülltechnik ist die Horizontalbefüllung. (Fig. 18) Sie unterscheidet sich prinzipiell von der vorhergehend Beschriebenen nur dadurch, dass das Füllrohr (49) bzw. die Füllrohre eben horizontal angeordnet sind, das Substrat also nicht hineinrollt bzw. geschüttet wird, sondern über eine Schnecke (56), die sich im jeweiligen Rohr befindet, hineintransportiert wird.

Das Mischen von geologischem Substrat und biogenem Material lässt sich optimieren, wenn das Holz, die Rindenstücke etc. zuvor angefeuchtet bzw. durchfeuchtet werden, bevor sie in den Einfülltrichter gelangen. Das gilt für beide Verfahren.

## Patentansprüche

1. Substratgefüllter Kunststoffgitterschlauch oder Geokunststoffgitterschlauch **dadurch gekennzeichnet**
- **dass** der Schlauch eine grobe dreidimensionale Struktur besitzt,
- **dass** die Gitterstruktur so beschaffen ist, dass Evertebraten wie aquatische Insekten diese durchdringen können, die Füllung jedoch gehalten wird, und
- **dass** die Füllung aus einer variablen Mischung aus geologischem Substrat wie Kies, Steinchen, Steinen und biogenem Material wie Totholz, Rinde, Zapfen, Moose oder auch Tonkügelchen oder Geoton besteht, in der sich die Evertebraten bewegen können.

2. Substratgefüllter Kunststoffgitterschlauch oder Geokunststoffgitterschlauch nach Anspruch 1
**dadurch gekennzeichnet**
- **dass** eine Wirrlage aus Kunststoffendlosfilamenten die dreidimensionale Struktur des Schlauches darstellt.

3. Substratgefüllter Kunststoffgitterschlauch oder Geokunststoffgitterschlauch nach Anspruch 2
**dadurch gekennzeichnet**
- **dass** die Endlosfilamente innerhalb der Wirrlage unterschiedliche Durchmesser aufweisen.

4. Substratgefüllter Kunststoffgitterschlauch oder Geokunststoffgitterschlauch nach einem der Ansprüche 1 bis 3
**dadurch gekennzeichnet**
- **dass** die Außenseite eine räumliche Struktur, bevorzugt eine Hoch-Tief-Struktur, aufweist.

5. Substratgefüllter Kunststoffgitterschlauch oder Geokunststoffgitterschlauch nach einem der Ansprüche 1 bis 4
**dadurch gekennzeichnet**
- **dass** der Schlauch flächenartig, räumlich verbreiterte Endungen und / oder ein- oder mehrfach geteilte Abschlüsse, die durch Kunststoffgitter oder Geokunststoffgitter - ein- oder mehrlagig oder mit räumlicher Struktur - verbunden sein können, aufweist.

6. Substratgefüllter Kunststoffgitterschlauch oder Geokunststoffgitterschlauch nach einem der Ansprüche 1 bis 5
**dadurch gekennzeichnet**
- **dass** der Schlauch zum Schlauchinneren zu einer ebenen Fläche verdichtet ist, wobei die Stabilität der Schlauchstruktur durch Schweißpunkte an denen mehrere Endlosfilamente zusammengeschmolzen sind, erhöht ist.

7. Substratgefüllter Kunststoffgitterschlauch oder Geokunststoffgitterschlauch nach einem der Ansprüche 1 bis 6
**dadurch gekennzeichnet**
- **dass** die dreidimensionale Schicht verstärkt wird durch ein auf der Schlauchinnen- oder -außenseite befindliches grobes Geogitter bevorzugt ein Rechteck-, Waben-, Sechseck-, Diagonalgeogitter oder eine großgelochte stabile Geokunststofflage oder Geokunststofffolie, wobei diese mit dem Schlauch verbunden ist.

8. Substratgefüllter Kunststoffgitterschlauch oder Geokunststoffgitterschlauch nach einem der Ansprüche 1 bis 7
**dadurch gekennzeichnet**
- **dass** der Schlauch bei größerem Durchmesser zur Erhöhung der Stabilität ein Innengeogitter besitzt, welches das Schlauchinnere in mehrere Längskompartimente unterteilt.

9. Substratgefüllter Kunststoffgitterschlauch oder Geokunststoffgitterschlauch nach einem der Ansprüche 1 bis 8
**dadurch gekennzeichnet**
- **dass** der Schlauch einen Grau-, Blau-, Grün- oder Beigeton aufweist.

10. Verfahren zur Herstellung des substratgefüllten Kunststoffgitterschlauches oder Geokunststoffgitterschlauches nach einem der Ansprüche 1 bis 9 **dadurch gekennzeichnet**
- **dass** der Schlauch aus einem Polymer, deren Dichte größer als Wasser ist, hergestellt wird,
- **dass** das Ausgangsmaterial als Granulat oder in pulverisierter Form über einen Trichter einer vorzugsweise vertikal aufgestellten Extruderanlage zugeführt wird,
- **dass** das Material über eine Extruderschnecke, die sich im Extruderrohr befindet, transportiert wird, wobei die Masse über Heizspiralen, die um den Extruder angebracht sind, erwärmt wird und schmilzt, durch die Schnecke verdichtet wird, plastifiziert, entgast, homogenisiert und schließlich in den Extruderkopf, der eine Glocken- oder Kegelhüllenform aufweist, gelangt,
- **dass** das Extrudat über konzentrisch angeordnete Düsen als Endlosfilamente austritt und diese Filamente in ein Wasserbad, welches durch einen äußeren Formring und den abgerundeten Schlauchformzylinder begrenzt wird, fallen, wobei sie auf Grund der Dichte, die die des Wassers übersteigt, in die Tiefe gleiten,
- **dass** die Filamente sich vor den konzentrisch angeordneten Strukturformpressen oder -walzen oder -rollen stauen, wobei ein Gewirr entsteht,
- **dass** die Strukturformpressen oder -walzen die Dicke der Wirrlage bestimmen, deren Oberflächenstruktur prägen und Filamente miteinander verschweißen können,
- **dass** unterhalb dieses Formgebungsprozesses Rollen, bevorzugt mit Spikes, die um den Schlauchformzylinder angebracht sind, den Schlauch transportieren, wobei dieser sich im Wasserbad abkühlt,
- **dass** unterhalb des Schlauchformzylinders der abgerollte Endlosschlauch über Umlenkrollen, bevorzugt mit Spikes, einer Aufwicklung zugeführt wird,
- **dass** der Schlauch anschließend auf die spätere Länge zugeschnitten wird,
- **dass** der Schlauch, sofern konstruktiv erforderlich, durch ein Kunststoffgitter oder einen Kunststoffgitterschlauch oder ein Geokunststoffgitter oder einen Geokunststoffgitterschlauch verstärkt wird, indem die Schläuche auf einem Zylinder übereinander gezogen und miteinander durch Nähen, Schweißen oder Kleben verbunden werden,
- **dass** anschließend spezielle Enden durch teilweises Aufschneiden des Schlauches, Einsetzen von Passstücken und Verbinden dieser mit dem Schlauch bevorzugt durch Nähen, Schweißen oder Kleben, oder aber durch einfaches thermisches Aufweiten bevorzugt Dehnen, entstehen,
- **dass** die geteilten oder geformten Endenabschlüsse durch Nähen, Schweißen oder Kleben verschlossen werden, wobei ein Schlauchende zum Füllen mit Substrat offen bleibt, und
- **dass** der Schlauch dann der Schütt- oder Horizontalbefüllung zugeführt wird und nach der Befüllung bevorzugt durch Nähen, Schweißen oder Kleben verschlossen und in einer Transporthülle verpackt wird.

11. Verfahren zur Herstellung des substratgefüllten Kunststoffgitterschlauches oder Geokunststoffgitterschlauches nach einem der Ansprüche 1 bis 9 **dadurch gekennzeichnet**
- **dass** der Schlauch aus einem Polymer, deren Dichte kleiner als Wasser ist, hergestellt wird,
- **dass** das Ausgangsmaterial als Granulat oder in pulverisierter Form über einen Trichter einer vorzugsweise vertikal aufgestellten Extruderanlage zugeführt wird,
- **dass** das Material über eine Extruderschnecke, die sich im Extruderrohr befindet, transportiert wird, wobei die Masse über Heizspiralen, die um den Extruder angebracht sind, erwärmt wird und schmilzt, durch die Schnecke verdichtet wird, plastifiziert, entgast, homogenisiert und schließlich in den Extruderkopf, der eine Glocken- oder Kegelhüllenform hat, gelangt,
- **dass** das Extrudat über konzentrisch angeordnete Düsen als Endlosfilamente austritt und diese Filamente in ein Wasserbad fallen, wobei sie auf Grund der Dichte, die geringer als die des Wassers ist, schwimmen und an der Wasseroberfläche ein Gewirr bilden, welches durch konzentrisch um die Fallstrecke angeordnete Transportrollen, die Spikes besitzen, in die Tiefe gezogen wird,
- **dass** die darunter befindlichen Strukturformpressen oder -walzen die Dicke der Wirrlage bestimmen, deren Oberflächenstruktur prägen und Filamente miteinander verschweißen können,
- **dass** unterhalb dieses Formgebungsprozesses Rollen, mit Spikes besitzen, die um den Schlauchformzylinder angebracht sind, den Schlauch transportieren, wobei dieser sich im Wasserbad abkühlt,
- **dass** unterhalb des Schlauchformzylinders der abgerollte Endlosschlauch über Umlenkrollen, die Spikesbesitzen, einer Aufwicklung zugeführt wird,
- **dass** der Schlauch anschließend auf die spätere Länge zugeschnitten wird,
- **dass** der Schlauch, sofern konstruktiv erforderlich, durch ein Kunststoffgitter oder einen Kunststoffgitterschlauch der ein Geokunststoffgitter oder einen Geokunststoffgitterschlauch verstärkt wird, indem die Schläuche auf einem Zylinder übereinander gezogen und miteinander durch Nähen, Schweißen oder Kleben verbunden werden,
- **dass** anschließend spezielle Enden durch teilweises Aufschneiden des Schlauches, Einsetzen von Passstücken und Verbinden dieser mit dem Schlauch durch Nähen, Schweißen oder Kleben, oder aber durch einfaches thermisches Aufweiten bevorzugt Dehnen entstehen,
- **dass** die geteilten oder geformten Endenabschlüsse durch Nähen, Schweißen oder Kleben verschlossen werden, wobei ein Schlauchende zum Füllen mit Substrat offen bleibt, und
- **dass** der Schlauch dann der Schütt- oder Horizontalbefüllung zugeführt wird und nach der Befüllung durch Nähen, Schweißen oder Kleben verschlossen und in einer Transporthülle verpackt wird.

12. Verfahren zur Herstellung des substratgefüllten Kunststoffgitterschlauches oder Geokunststoffgitterschlauches nach einem der Ansprüche 10 oder 11 **dadurch gekennzeichnet**
- **dass** die Filamente aus Düsen austreten, wobei der Extruderkopf, an welchem sich die Düsen oder Düsenmundstücke befinden, oder das Düsenmundstück selbst langsam rotieren.

13. Verfahren zur Schüttbefüllung des substratgefüllten Kunststoffgitterschlauches oder Geokunststoffgitterschlauches nach einem der Ansprüche 1 bis 9 **dadurch gekennzeichnet**
- **dass** auf einer Ablagerollfläche eine Transportschutzhülle ausgebreitet wird, auf der anschließend der vorgefertigte Schlauch, der an einem Ende nicht verschlossen ist, ausgerollt wird,
- **dass** Transportschutzhülle und Schlauch bevorzugt durch Klammern temporär miteinander verbunden werden,
- **dass** am offenen Schlauchende Krallen oder Klammern befestigt werden, die den Schlauch über das Füllrohr oder bei längsunterteilten Schläuchen mit Innengeogitter über die Füllrohre ziehen,
- **dass** das Schüttgut, das durch das Mischen von geologischem Substrat und biogenem Material in einem mit einer Schnecke ausgestatteten Trichter entsteht, über ein schräg abwärts gerichtetes Rohr in den Schlauch gefüllt wird,
- **dass** nach Befüllung der Schlauch, bevorzugt über ein Zugsystem, vorzugsweise mit Klammern oder Krallen ausgestattet, welches am gegenüberliegenden Schlauchende angebracht ist, langsam nach vorn gezogen oder aber durch den Antrieb der Rollen der Ablagerollfläche gerollt wird,
- **dass** dann anschließend der Schlauch durch Nähen, Schweißen oder Kleben verschlossen wird, wobei sich die dafür notwendige Vorrichtung, bevorzugt eine Nähmaschine, seitlich der Ablagerollfläche befindet und dann im Arbeitsgang über das zu verschließende Ende fährt, und
- **dass** der Vorgang mit der Umlagerung des substratgefüllten Kunststoffgitterschlauches oder Geokunststoffgitterschlauches, der in der Transportschutzhülle und durch diese aufgenommen wird, und auf einer großen Palette gelagert wird, abschließt.

14. Verfahren zur Horizontalbefüllung des substratgefüllten Kunststoffgitterschlauches oder Geokunststoffgitterschlauches nach einem der Ansprüche 1 bis 9 **dadurch gekennzeichnet**
- **dass** auf einer Ablagerollfläche eine Transportschutzhülle ausgebreitet wird, auf der anschließend der vorgefertigte Schlauch, der an einem Ende noch nicht verschlossen ist, ausgerollt wird,
- **dass** Transportschutzhülle und Schlauch, bevorzugt durch Klammern temporär miteinander verbunden werden,
- **dass** am offenen Schlauchende Krallen oder Klammern befestigt werden, die den Schlauch über das Füllrohr oder bei längsunterteilten Schläuchen mit Innengeogitter über die Füllrohre ziehen,
- **dass** das Füllgut, das durch das Mischen von geologischem Substrat und biogenem Material in einem mit einer Schnecke ausgestatteten Trichter entsteht, über ein horizontal angeordnetes Füllrohr, welches eine Schnecke enthält, in den Schlauch befördert wird,
- **dass** nach Befüllung der Schlauch, bevorzugt über ein Zugsystem, vorzugsweise mit Klammern oder Krallen ausgestattet, welches am gegenüberliegenden Schlauchende angebracht ist, langsam nach vorn gezogen oder aber durch den Antrieb der Rollen der Ablagerollfläche gerollt wird,
- **dass** dann anschließend der Schlauch durch Nähen, Schweißen oder Kleben verschlossen wird, wobei sich die dafür notwendige Vorrichtung, bevorzugt eine Nähmaschine, seitlich der Ablagerollfläche befindet und dann im Arbeitsgang über das zu verschließende Ende fährt, und
- **dass** der Vorgang mit der Umlagerung des substratgefüllten Kunststoffgitterschlauches oder Geokunststoffgitterschlauches, der in der Transportschutzhülle und durch diese aufgenommen wird, und auf einer großen Palette gelagert wird, abschließt.

## Claims

1. Substrate-filled plastic mesh hose or geosynthetic mesh hose
**characterized in**
- **that** the hose has a rough three-dimensional structure,
- **that** the lattice strukture is such that invertebrates such as aquatic insects ca penetrate it, but the filling is held, and
- hat the filling consists of a variable mixture of geological substrate such as gravel, pepples, stones and biogenic material such as dead wood, bark, cones, moss or clay balls or geoton in which the invertebrates can move.

2. Substrate-filled plastic mesh hose or geosynthetic mesh hose according to claim 1,
**characterized in**
- **that** a random layer of continuous plastic filaments represents the three-dimensional structure of the hose.

3. Substrate-filled plastic mesh hose or geosynthetic mesh hose according to claim 2,
**characterized in**
- **that** the continuous filaments have different diameters within the random layer.

4. Substrate-filled plastic mesh hose or geosynthetic mesh hose according to one of claims 1 to 3, **characterized in**
- **that** the outside has a spatial structure, preferably a high-low structure.

5. Substrate-filled plastic mesh hose or geosynthetic mesh hose according to one of claims 1 to 4, **characterized in**
- **that** the hose surface-like, spatially widened endings and / or one or more divided ends, which can be connected by plastic grids or geosynthetic grids - one or more layers or with a spatial structure, having.

6. Substrate-filled plastic mesh hose or geosynthetic mesh hose according to one of claims 1 to 5, **characterized in**
- **that** the hose is compressed to the inside of the hose to form a flatsurface, the stabilityof the hose structure being increased by welding points at which several continuous filaments are fused together.

7. Substrate-filled plastic mesh hose or geosynthetic mesh hose according to one of claims 1 to 6, **characterized in**
- **that** the three-dimensionl layer is reinforced by a coarse geogrid located on the inside or outside of the hose, preferably a rectangular, honeycomb, hexagonal, diagonal geogrid or a large-perforated, stable geosynthetic layer or geosynthetic film, which is connected to the hose.

8. Substrate-filled plastic mesh hose or geosynthetic mesh hose according to one of claims 1 to 7, **characterized in**
- **that** the hose, with a larger diameter, has an inner geogrid to increase stability, which divides the hose interior into several longitudinal compartments.

9. Substrate-filled plastic mesh hose or geosynthetic mesh hose according to one of claims 1 to 8, **characterized in**
- **that** the hose has a gray, blue, green or light brown color.

10. Method for producing the substrat-filled plastic mesh hose or geoynthetic mesh hose according to one of claims 1 to 9, **characterized in**
- **that** the hose is made from a polymer whose density is greater than water,
- **that** the starting material is fed als granules or in powered form via a funnel to a preferably vertically installed extruder system,
- **that** the material is transported via an extruder screw located in the extruder pipe, the mass being heated via heating coils that are attached around the extruder and melts, is compressed by the screw, plasticized, degassed, homogenized and finally reaches the extruder head, which has a bell or cone shell shape,
- **that** the extrudate emerges as continuous filaments via concentrically arranged nozzles and these filaments fall into a water bath which is delimited by an outer shaped ring and the rounded shaped tubular cylinder, wherein they slide into the depths due to their density, which exceeds that of the water,
- **that** the filaments accumulate in front of the concentrically arranged structural molding presses or -roll or -rollers, whereby a tangle is created,
- **that** the structural molding presses or rollers determine the thickness of the random layer, shape ist surface structure and can weld filaments together,
- **that** below this shaping process rollers, preferably with spikes, which are attached around the hose cylinder, transport the hose, whereby it cools in the water bath,
- **that** the unrolled endless hose is fed to a roll-up below the hose-forming cylinder via deflection rollers, preferably with spikes,
- **that** the hose is then cut to the later length,
- **that** the hose, if structurally required, is reinforced by a plastic mesh or a plastic mesh hose or a geosynthetic mesh or a geosynthetic mesh hose by pulling the hoses over one another on a cylinder and are connected to each other by sewing, welding or gluing,
- **that** then special ends by partially cutting the hose, inserting adapters and connecting these to the hose, preferably by sewing, welding or gluing, or by simply widening preferring to stretch, arise,
- **that** the divided or shaped ends are closed by sewing, welding or gluing, one end of the hose remaining open for filling with substrate, and
- **that** the hose is then fed to the bucket or horizontal filling and, after filling, is preferably closed by sewing, welding or gluing and packed in a transport cover.

11. Method for producing the substrat-filled plastic mesh hose or geoynthetic mesh hose according to one of claims 1 to 9, **characterized in**
- **that** the hose is made from a polymer whose density is less than water,
- **that** the starting material is fed als granules or in powered form via a funnel to a preferably vertically installed extruder system,
- **that** the material is transported via an extruder screw located in the extruder pipe, the mass being heated via heating coils that are attached around the extruder and melts, is compressed by the screw, plasticized, degassed, homogenized and finally reaches the extruder head, which has a bell or cone shell shape,
- **that** the extrudate exits through concentrically arranged nozzles as continuous filaments nd these filments fall into a water bath, where they are less than of the water due to the density, swim and form a tangle on the surface of the water, which is pulled into the depths by transport rollers with spikes arranged concentrically around the fall section,
- **that** the located underneath structural molding presses or rollers determine the thickness of the random layer, shape ist surface structure and can weld filaments together,
- **that** below this shaping process rollers, with spikes, which are attached around the hose cylinder, transport the hose, whereby it cools in the water bath,
- **that** the unrolled endless hose is fed to a roll-up below the hose-forming cylinder via deflection rollers, with spikes,
- **that** the hose is then cut to the later length,
- **that** the hose, if structurally required, is reinforced by a plastic mesh or a plastic mesh hose or a geosynthetic mesh or a geosynthetic mesh hose by pulling the hoses over one another on a cylinder and are connected to each other by sewing, welding or gluing,
- **that** then special ends by partially cutting the hose, inserting adapters and connecting these to the hose, preferably by sewing, welding or gluing, or by simply widening preferring to stretch, arise,
- **that** the divided or shaped ends are closed by sewing, welding or gluing, one end of the hose remaining open for filling with substrate, and
- **that** the hose is then fed to the bucket or horizontal filling and, after filling, is preferably closed by sewing, welding or gluing and packed in a transport cover.

12. Method for producing the substrat-filled plastic mesh hose or geoynthetic mesh hose according to one of claims 10 or 11, **characterized in**
- **that** the filaments exit from nozzles, the extruder head on which the nozzle mouthpieces are located or the nozzle mouthpiece itself rotate slowly.

13. Method for bulk filling of substrate-filled plastic mesh hose or geosynthetic mesh hose according to one of claims 1 to 9, **characterized in**
- **that** a protective transport cover is spread out on storage roller surface, on which the prefabricated hose, which is not closed at one end, is then rolled out,
- **that** the protective transport cover and hose are preferably temporarily connected to one another by clips,
- **that** claws or clamps are attached to the open hose end which pull the hose over the filling pipe or, in the case of longitudinally divided hoses with internal geogrids, over the filling pipes,
- **that** the bulk material, which is created by mixing geological substrate and biogenic material in a funnel equipped with a screw, is inserted into the hose via a downward sloping pipe is filled,
- **that** after filling the hose, preferably equipped with a pulling system, preferably equipped with clamps or claws, which is attached to the opposite end of the hose, is slowly pulled forward or else is rolled by the drive of the rollers of the storage roller surface,
- **that** the hose is then subsequently closed by sewing, welding or gluing, the necessary device, preferably a sewing machine, being located on the side of the storage roller surface and then in the working process moves over the end to be closed, and
- **that** the process concludes with the relocation of the substrate-filled plastic lattice hose or geosynthetic lattice hose or geosynthetic lattice hose, which is received in and through the protective transport cover and stored on a large pallet.

14. Method for horizontal filling of substrate-filled plastic mesh hose or geosynthetic mesh hose according to one of claims 1 to 9, **characterized in**
- **that** a protective transport cover is spread out on storage roller surface, on which the prefabricated hose, which is not closed at one end, is then rolled out,
- **that** the protective transport cover and hose are preferably temporarily connected to one another by clips,
- **that** claws or clamps are attached to the open hose end which pull the hose over the filling pipe or, in the case of longitudinally divided hoses with internal geogrids, over the filling pipes,
- **that** the filling material, which is produced by mixing geological substrate and biogenic material in a funnel equipped with a screw, is via a horizontally arranged filling pipe which has a screw contains, is conveyed into the hose,
- **that** after filling the hose, preferably equipped with a pulling system, preferably equipped with clamps or claws, which is attached to the opposite end of the hose, is slowly pulled forward or else is rolled by the drive of the rollers of the storage roller surface,
- **that** the hose is then subsequently closed by sewing, welding or gluing, the necessary device, preferably a sewing machine, being located on the side of the storage roller surface and then in the working process moves over the end to be closed, and
- **that** the process concludes with the relocation of the substrate-filled plastic lattice hose or geosynthetic lattice hose or geosynthetic lattice hose, which is received in and through the protective transport cover and stored on a large pallet.

## Revendications

1. Tuyau en treillis plastique rempli de substrat ou tuyau en treillis géosynthétique,
**caractérisé en ce**
- **que** le tuyau a une structure tridimensionnelle grossière,
- **que** la structure en treillis est telle que les invertébrés tels que les insectes aquatiques peuvent y pénétrer, mais le remplissage est maintenu, et
- **que** le remplissage est constitué d'un mélange variable de substrat géologique tel que gravier, cailloux, pierres et matériau biogénique tel que bois mort, écorce, cônes, boules de mousse ou d'argile ou géoton en laquelle les invertébrés peuvent se déplacer.

2. Tuyau en treillis plastique rempli de substrat ou tuyau en treillis géosynthétique selon la revendication 1, **caractérisé en ce**
- **qu'** une couche aléatoire de filaments en plastique continus représente la structure tridimensionnelle du tuyau.

3. Tuyau en treillis plastique rempli de substrat ou tuyau en treillis géosynthétique selon la revendication 2, **caractérisé en ce**
- **que** les filaments continus ont des diamètres différents à l'intérieur de la couche aléatoire.

4. Tuyau en treillis plastique rempli de substrat ou tuyau en treillis géosynthétique selon l'une des revendications 1 à 3, **caractérisé en ce**
- **que** l'extérieur présente une structure spatiale, de préférence une structure haute-basse.

5. Tuyau en treillis plastique rempli de substrat ou tuyau en treillis géosynthétique selon l'une des revendications 1 à 4, **caractérisé en ce**
- **que** les extrémités du tuyau en forme de surface, élargies dans l'espace et / ou une ou plusieurs extrémités divisées, qui peuvent être reliées par des grilles en plastique ou des grilles géosynthétiques - une ou plusieurs couches ou avec une structure spatiale, ayant.

6. Tuyau en treillis plastique rempli de substrat ou tuyau en treillis géosynthétique selon l'une des revendications 1 à 5, **caractérisé en ce**
- **que** le tuyau est comprimé à l'intérieur du tuyau pour former une surface plane, la stabilité de la structure du tuyau évant augmentée par des points de soudure à laquelle plusieurs filaments continus sont fusionnés.

7. Tuyau en treillis plastique rempli de substrat ou tuyau en treillis géosynthétique selon l'une des revendications 1 à 6, **caractérisé en ce**
- **que** la couche tridimensionnelle est renforcée par une géogrille grossière située à l'intérieur ou à l'extérieur du tuyau, de préférence une forme rectangulaire, en nid d'abeille, hexagonale, une géogrille diagonale ou une couche géosynthétique stable à grandes perforations ou un film géosynthétique, qui est connecté au tuyau.

8. Tuyau en treillis plastique rempli de substrat ou tuyau en treillis géosynthétique selon l'une des revendications 1 à 7, **caractérisé en ce**
- **que** le tuyau,de plus grand diamètre, présente une géogrille intérieure pour augmenter la stabilité, qui divise l'intérieur du tuyau en plusieurs compertiments longitudinaux.

9. Tuyau en treillis plastique rempli de substrat ou tuyau en treillis géosynthétique selon l'une des revendications 1 à 8, **caractérisé en ce**
- **que** le tuyau a un ton gris, bleu, vert ou beige.

10. Procédé de fabrication du tuyau en treillis plastique rempli de substrat ou du tuyau en treillis géosynthétique selon l'une des revendications 1 à 9, **caractérisé en ce**
- **que** le tuyau est en un polymére dont la densité est supérieure à celle de l'aeu,
- **que** la matière première est amenée sous forme de granulés ou sous forme de poudre via un entonnoir à un système d'extrusion de préférence installé verticalement,
- **que** le matériau est transporté via une vis d'extrusion, la masse étantchauffée via des serpentins chauffants qui sont fixé autour de l'extrudeuse et fond, est comprimé par la vis, plastifié, dégazé, homogénéise et atteint enfin la tête de l'extrudeuse, qui a une forme de cloche ou de coque conique,
- **que** l'extrudat sort sous forme de filaments continus par des buses disposées concentriquement et ces filaments tombent dans un bain d'eau, qui est délimeté par un anneau profilé extérieur et le cylindre tubulaire de forme arrondie, dans lesquels ils glissent dans les profondeurs du fait de leur densité, qui dépasse celle de l'eau,
- **que** les filaments s'accumulent devant les presses ou rouleaux de moulage de structure disposés concentriquement, ce qui crée un enchevêtrement,
- **que** les presses ou rouleaux de moulage structurel déterminent l'épaisseur de la couche aléatoire, façonnent sa structure de surface et peuvent souder des fils entre eux,
- **que** sous ce processus de formage, des rouleaux, de préférence avec des pointes, qui sont fixés autour du cylindre de tuyau, transportent le tuyau, par lequel il se refroidit dans le bain-marie,
- **que** le tuyau sans fin déroulé est acheminé vers un enroulement via des rouleaux de renvoi, de préférence avec des pointes, sous le tuyau -formage cylindre,
- **que** le tuyau est ensuite coupé à la longueur ultérieure,
- **que** le tuyau, si structurellement requis, est renforcé par un treillis en plastique ou un tuyau en treillis plastique ou un treillis géosynthétique ou un tuyau en treillis géosynthétique en tirant les tuyaux les uns sur les autres sur un cylindre et sont reliés les uns aux autres par couture, soudage ou collage,
- **qu'**alors des extrémités spéciales en découpant partiellement le tuyau, en insérant des pièces de raccord et en les raccordant au tuyau, de préférence par couture, soudage ou collage, ou par simple dilatation thermique, de préférence étirage, se produit,
- **que** les extrémités divisées ou façonnées sont fermées par couture, soudage ou collage, une extrémité du tuyau restant ouverte pour le remplissage avec substrat, et
- **que** le tuyau est ensuite acheminé vers le seau ou le remplissage horizontal et, après le remplissage, est de préférence fermé par couture, soudage ou collage et emballé dans une housse de transport.

11. Procédé de fabrication du tuyau en treillis plastique rempli de substrat ou du tuyau en treillis géosynthétique selon l'une des revendications 1 à 9, **caractérisé en ce**
- **que** le tuyau est en un polymére dont la densité est inférieure à celle de l'aeu,
- **que** la matière première est amenée sous forme de granulés ou sous forme de poudre via un entonnoir à un système d'extrusion de préférence installé verticalement,
- **que** le matériau est transporté via une vis d'extrusion, la masse étantchauffée via des serpentins chauffants qui sont fixé autour de l'extrudeuse et fond, est comprimé par la vis, plastifié, dégazé, homogénéise et atteint enfin la tête de l'extrudeuse, qui a une forme de cloche ou de coque conique,
- **que** l'extrudat sort sous forme de filaments continus à travers des buses disposées concentriquement et ces filaments tombent dans un bain d'eau, où ils sont inférieure à celle de l'eau en raison de la densité, nage et forme un enchevêtrement à la surface de l'eau, qui est entraìnée dans les profondeurs par des rouleaux de transport à pointes disposés concentriquement autour de la section de chute,
- **que** les presses ou rouleaux de moulage structurel situés en dessous déterminent l'épaisseur de la couche aléatoire, façonnent sa structure de surface et peuvent souder des fils entre eux,
- **que** sous ce processus de formage, des rouleaux qui ont des pointes, qui sont fixés autour du cylindre de tuyau, transportent le tuyau, par lequel il se refroidit dans le bain-marie,
- **que** le tuyau sans fin déroulé est acheminé vers un enroulement via des rouleaux de renvoi qui ont des pointes, sous le tuyau -formage cylindre,
- **que** le tuyau est ensuite coupé à la longueur ultérieure,
- **que** le tuyau, si structurellement requis, est renforcé par un treillis en plastique ou un tuyau en treillis plastique ou un treillis géosynthétique ou un tuyau en treillis géosynthétique en tirant les tuyaux les uns sur les autres sur un cylindre et sont reliés les uns aux autres par couture, soudage ou collage,
- **qu'**alors des extrémités spéciales en découpant partiellement le tuyau, en insérant des pièces de raccord et en les raccordant au tuyau, de préférence par couture, soudage ou collage, ou par simple dilatation thermique, de préférence étirage, se produit,
- **que** les extrémités divisées ou façonnées sont fermées par couture, soudage ou collage, une extrémité du tuyau restant ouverte pour le remplissage avec substrat, et
- **que** le tuyau est ensuite acheminé vers le seau ou le remplissage horizontal et, après le remplissage, est de préférence fermé par couture, soudage ou collage et emballé dans une housse de transport.

12. Procédé de fabrication du tuyau en treillis plastique rempli de substrat ou du tuyau en treillis géosynthétique selon l'une des revendications 10 ou 11, **caractérisé en ce**
- **que** les filaments sortent des buses, de la tête d'extrudeuse sur laquelle se trouvent les buses ou les embouts de buse ou l'embout de buse lui-mème tourne lentement.

13. Procédé de remplissage en vrac du tuyau en treillis plastique rempli de substrat ou du tuyau en treillis géosynthétique selon l'une des revendications 1 à 9, **caractérisé en ce**
- **qu'**un couvercle protecteur de transport est étalé sur une surface de rouleau de stockage, sur laquelle le tuyau préfabriqué, qui n'est pas fermé à une extrémité, est ensuite déroulé,
- **que** le couvercle de transport de protection et le tuyau sont de préférence temporairement reliés entre eux par des clips,
- **que** des griffes ou des colliers sont fixés à l'extrémité ouverte du tuyau qui tirent le tuyau sur le tuyau de remplissage ou, dans le cas de tuyaux divisés longitudinalement avec géogrilles internes, sur les tuyaux de remplissage,
- **que** le matériau en vrac, qui est créé en mélangeant substrat géologique et matériau biogénique dans un entonnoir équipé d'une vis, est inséré dans le tuyau via un tuyau incliné vers le bas est rempli,
- **qu'**après le remplissage du tuyau, de préférence équipé d'un système de traction, de préférence équipé de colliers ou de griffes, qui est fixé à l'extrémité opposée du tuyau, tirée lentement vers l'avant ou par l'entraìnement des rouleaux de la surface des rouleaux de stockage est enroulée,
- **que** le tuyau est ensuite refermé par couture, soudage ou collage, le dispositif requis pour cela, de préférence une couture machine, étant située sur le côté de la surface du rouleau de stockage, puis dans l'opération se déplace sur l'extrémité à fermer, et
- **que** le processus se termine par le déplacement du tuyau en treillis plastique rempli de substrat ou du tuyau en treillis géosynthétique, qui est recu dans et à travers la housse de protection de transport et stocké sur une grande palette.

14. Procédé de remplissage horizontal du tuyau en treillis plastique rempli de substrat ou du tuyau en treillis géosynthétique selon l'une des revendications 1 à 9, **caractérisé en ce**
- **qu'**un couvercle protecteur de transport est étalé sur une surface de rouleau de stockage, sur laquelle le tuyau préfabriqué, qui n'est pas fermé à une extrémité, est ensuite déroulé,
- **que** le couvercle de transport de protection et le tuyau sont de préférence temporairement reliés entre eux par des clips,
- **que** des griffes ou des colliers sont fixés à l'extrémité ouverte du tuyau qui tirent le tuyau sur le tuyau de remplissage ou, dans le cas de tuyaux divisés longitudinalement avec géogrilles internes, sur les tuyaux de remplissage,
- **que** le matériau de remplissage, qui est produit par mélange de substrat géologique et de matériau biogénique dans un entonnoir équipé d'une vis, est via un tuyau de remplissage disposé horizontalement qui a une vis contient, est transporté dans le tuyau,
- **qu'**après le remplissage du tuyau, de préférence équipé d'un système de traction, de préférence équipé de colliers ou de griffes, qui est fixé à l'extrémité opposée du tuyau, tirée lentement vers l'avant ou par l'entraìnement des rouleaux de la surface des rouleaux de stockage est enroulée,
- **que** le tuyau est ensuite refermé par couture, soudage ou collage, le dispositif requis pour cela, de préférence une couture machine, étant située sur le côté de la surface du rouleau de stockage, puis dans l'opération se déplace sur l'extrémité à fermer, et
- **que** le processus se termine par le déplacement du tuyau en treillis plastique rempli de substrat ou du tuyau en treillis géosynthétique, qui est recu dans et à travers la housse de protection de transport et stocké sur une grande palette.
